# NEUE EUROPÄISCHE PATENTSCHRIFT

(11) **EP 2 736 731 B2**
(45) Veröffentlichungstag und Bekanntmachung des Hinweises auf die Entscheidung über den Einspruch: **17.07.2024**
(45) Hinweis auf die Patenterteilung: 31.03.2021
(21) Anmeldenummer: 12758396.1
(22) Anmeldetag: 05.07.2012
(51) Int. Cl.: B43K 19/14, B43K 19/16

(54) **SCHREIB-, ZEICHEN-, MAL- ODER KOSMETIKGERÄT UMFASSEND EINEN WABENKÖRPER**
WRITING, DRAWING, PAINTING OR COSMETIC DEVICE COMPRISING A HONEYCOMB BODY
APPAREIL D'ÉCRITURE, DE DESSIN, DE PEINTURE OU COSMÉTIQUE, COMPORTANT UN CORPS ALVÉOLAIRE

(30) Priorität: 28.07.2011 DE 102011109177
(43) Veröffentlichungstag der Anmeldung: 04.06.2014
(73) Patentinhaber: STAEDTLER SE, 90427 Nürnberg (DE)
(72) Erfinder: THIES, Andreas, 91325 Adelsdorf (DE)
(74) Vertreter: Kretschmann, Dennis
(86) Internationale Anmeldenummer: PCT/EP2012/002811
(87) Internationale Veröffentlichungsnummer: WO 2013/013762

(56) Entgegenhaltungen:
- DE-A1- 2 144 053
- FR-A- 944 811
- US-A- 6 019 533

## Beschreibung

Die Erfindung betrifft ein Schreib-, Zeichen-, Mal,- oder Kosmetikgerät nach dem Oberbegriff des Anspruch 1.

Wabenkörper sowie deren prinzipieller Aufbau sind aus der Katalysatortechnik, beispielsweise aus der Katalysatortechnik für Kraftfahrzeuge bekannt. Derartige Wabenkörper zeichnen sich in der Regel durch eine geringe Dichte bei gleichzeitig hoher Festigkeit auf. Diese Wabenkörper sind zumeist aus teuerer Keramik oder teueren Metallen aufgebaut und weisen eine Vielzahl von - in der Regel zueinander achsparallel angeordnet - hohlen Längsstrukturen auf.

Unter Wabenkörpern werden nachfolgend Umhüllungen oder sonstige Elemente für Schreib-, Zeichen-, Mal,- oder Kosmetikgeräte verstanden. Derartige Geräte sind unter anderem Stifte, wie Blei, Farb- oder Kosmetikstifte mit farbabgebenden Minen, deren Minen unverschiebbar in Umhüllungen gehaltert sind und zur Erhaltung deren Funktionsfähigkeit angespitzt werden müssen. Dies gilt ebenfalls für Geräte deren Minen aus Radiergummi-Material bestehen. Des Weiteren können Wabenkörper als Elemente von/für Schreib-, Zeichen-, Mal,- oder Markiergeräten, wie Kugelschreiber, Fein- oder Fallminenstifte usw. eine vielfältige Verwendung finden. Als Elemente, welche aus Wabenkörpern ausgebildet sein können, seien beispielhaft Schäfte, Drücker, Abschlusskappen, Griffzonen, farbabgebende Minen und Klipps genannt.

Als weitere Elemente seinen Zwischenprodukte für die Herstellung von derartigen Geräten genannt, beispielsweise sogenannte Brettchen wie diese aus der klassischen Herstellung von holzgefassten Stiften bekannt sind.

Aus dem Stand der Technik sind beispielsweise Umhüllungen von holzgefassten Stiften bekannt, welche aus Holz, Holzersatzwerkstoffen oder thermoplastischen Kunststoffen bestehen.

Die Holzersatzwerkstoffe werden in neuerer Zeit eingesetzt, um die natürlichen Hölzer bzw. Holzvorkommen zu schonen.

Eine Form dieser sogenannten Holzersatzwerkstoffe stellen sogenannte Wood Plastik Composites (WPC) dar, bei denen es sich um thermoplastisch verarbeitbare Materialien mit unterschiedlichen Anteilen von Holz, Kunststoffen und Additiven handelt, die durch thermoplastische Formgebungsverfahren wie z. B. Extrusion, Spritzguss oder Pressen verarbeitet werden.

Beispielhaft für die Verwendung von WPC für holzgefasste Stifte sei die

DE 10 2008 034 013 A1 genannt, wobei das WPC als Holzersatzwerkstoff isotrope homogene physikalische Eigenschaften aufweist.

Im Allgemeinen weist WPC eine sehr hohe Dichte (> 1,0 g/cm³) auf, höher als die Dichte von Hölzern, welche für die Bleistiftfertigung eingesetzt werden und eine Dichte zwischen 0,3 und 0,6 g/cm³ aufweisen. Die Festigkeit hingegen ist geringer als die von Holz. Anisotrope Eigenschaften wie diese bei Holz vorliegen, können bei WPC nicht realisiert werden. Als nachteilig hat es sich zudem bei Stiften mit einer Minenummantelung aus WPC herausgestellt, dass ein höheres Spitzmoment nötig ist um den Stift anzuspitzen, da die physikalischen Eigenschaften bei WPC in allen Richtungen gleich sind.

Es hat sich gezeigt, wenn Holz durch isotropes WPC ersetzt wird, dass man zwar eine ausreichende Festigkeit einstellen kann, jedoch als Folge höhere Spitzmomente auftreten.

Hohe Festigkeit bei gleichzeitig guter Spitzbarkeit von Holz, konnte unter Verwendung von isotropem WPC nicht erreicht werden. Es kann festgehalten werden, dass Stifte, bestehend aus Minen und einer Ummantelung aus WPC, immer einen Kompromiss aus Festigkeit und Spitzbarkeit darstellen.

Weiter werden in der DE-PS 801613 Bleistiftumhüllungen für Kernstifte gezeigt und beschrieben, wobei das Fasermaterial parallel zur Stiftachse verlaufend angeordnet ist. Dadurch kann eine hohe Bruchfestigkeit sowie eine gleichmäßige Schneidbarkeit beim Spitzvorgang erreicht bzw. eingestellt werden.

Nachteilig hat es sich jedoch bei derartigen Stiften herausgestellt, dass durch die Ausrichtung der Faser das Herstellungsverfahren sehr schwierig ist und derartige ummantelte Stifte ein relativ hohes Gewicht aufweisen. Zudem ist der erreichte Kompromiss zwischen Festigkeit und Spitzbarkeit für den Anwender bzw. Benutzer nicht zufriedenstellend.

Aus der EP 1150847 B1 ist ein Verfahren zur Herstellung von Stiften bekannt, bei welchem Mine und Minenumhüllung im Verfahren der Coextrusion hergestellt werden. Sowohl Mine als auch deren Umhüllung bestehen aus thermoplastischem Kunststoff.

Nachteilig ist es bei den derart hergestellten Stiften, dass diese ein sehr hohes Gewicht aufweisen und das Spitzmoment für den Benutzer inakzeptabel hoch ist. Bei derartigen Produkten wird viel Material verbraucht, was deren Herstellung zudem teuer macht.

DE-OS 2144053 beschreibt einen geschäumten Stift, welcher elliptische Hohlzellen aufweist.

Die Schriften US 6,019,533 und FR 944811 beschreiben ein reines Kunststoffprodukt in Form einer Griffzone bzw. einen Tintenspeicher, wobei diese vorbeschriebenen Teile mit achsparallelen hohlen Strukturen versehen sind.

**Aufgabe** der Erfindung ist es daher, ein Schreib-, Zeichen-, Mal,- oder Markiergerät zu schaffen, das die Nachteile des bekannten Standes der Technik nicht aufweist, wobei das Schreib-, Zeichen-, Mal- oder Kosmetikgerät welches einen Wabenkörper umfasst, welches neben einem geringem Gewicht und geringem Materialeinsatz eine hohe Festigkeit senkrecht zur Wabenstruktur aufweist.

Weiter ist es Aufgabe der Erfindung ein Schreib-, Zeichen-, Mal,- oder Markiergeräte mit unverschiebbar in Umhüllungen gehalterter Mine zu schaffen, welches mindestens einen Wabenkörper umfasst, wobei das Gerät eine hohe Festigkeit/Biegefestigkeit bei gleichzeitig sehr guter Spitzbarkeit aufweist.

Diese Aufgabe wird mit den Merkmalen gemäß Anspruch 1 gelöst. Die Aufgabe wird weiterhin gelöst durch ein Verfahren gemäß Anspruch 12 zur Herstellung eines Schreib-, Zeichen-, Mal- oder Kosmetikgeräts. Weitere Ausführungsformen sind mit den Unteransprüchen umfasst.

Gelöst wird die Aufgabe, indem ein Schreib-, Zeichen-, Mal- oder Kosmetikgerät mindestens einen Wabenkörper aufweist, wobei der Wabenkörper mindestens aus einem Grundkörper besteht, wobei der mindestens eine Wabenkörper/Grundkörper eine Vielzahl von zueinander achsparallel hohlen Längsstrukturen beinhaltet, wobei der mindestens eine Wabenkörper aus Naturstoff-Kunststoff-Verbundwerkstoff gebildet ist, und die hohlen Längsstrukturen als eine Röhrenstruktur ausgebildet sind.

Es hat sich in überraschender Weise gezeigt, dass in einer derart geschaffenen Anisotropie in Materialien zu sogenannten Wabenkörpern aus Naturstoff-Kunststoff-Verbundwerkstoff, insbesondere bei Verwendung von Holzersatzwerkstoffen, durch hohle Längsstrukturen eine Optimierung/Erhöhung der Biegefestigkeit bei senkrecht zu den Längsstrukturen auftretenden Belastung erzielt werden kann.

Weiter hat sich gezeigt, dass bei Schreib-, Zeichen-, Mal,- Markier- oder Kosmetikgeräten mit unverschiebbar/ verschie-besicher in Wabenkörpern/Umhüllungen gehalterten farbabgebenden Minen, nicht nur die Biegefestigkeit senkrecht zur Längsachse/Längsstrukturen verbessert wird, sondern auch die Spitzbarkeit signifikant verbessert wird. Die Vielzahl der hohlen Längsstrukturen des Wabenkörpers sind parallel zur Längsachse des Gerätes ausgerichtet bzw. angeordnet. Die Außenkontur der Geräte kann beispielsweise rund, oval, ellipsenförmig, vieleckig, sternförmig oder andersförmig ausgebildet sein. Der Wabenkörper ist hierbei als eine Umhüllung einer farbabgebenden Mine ausgebildet, wobei die Umhüllung und die farbabgebende Mine mittels Coextrusion hergestellt bzw. ausgebildet sind. Beispiele für derartige Geräte mit Wabenkörper sind Blei-, Bunt- oder Kosmetikstifte.

Der Wabenkörper kann aber auch als ein Zwischenprodukt für die Herstellung von Geräten ausgebildet sein. Beispielhaft seien die Brettchen aus der Bleistiftherstellung genannt, wobei zwischen zweier derartige Brettchen die Minen eingeleimt werden. Diese Brettchen könnten ebenfalls mit hohlen Längsstrukturen versehen werden. Die Herstellung derartiger Brettchen/Wabenkörper erfolgt über thermoplastische Extrusion.

Es hat sich zudem gezeigt, dass eine signifikante Verbesserung von Festigkeit und Spitzbarkeit im Wesentlichen unabhängig vom Querschnittsprofil der hohlen Längsstrukturen im Wabenkörper ist.

Als Beispiele für mögliche Querschnitte der achsparallen hohlen Längsstrukturen, welche in den Wabenkörpern ausgebildet sind, seien beispielhaft runde, ellipsenförmige, vieleckige und/oder sternförmige Querschnitte genannt.

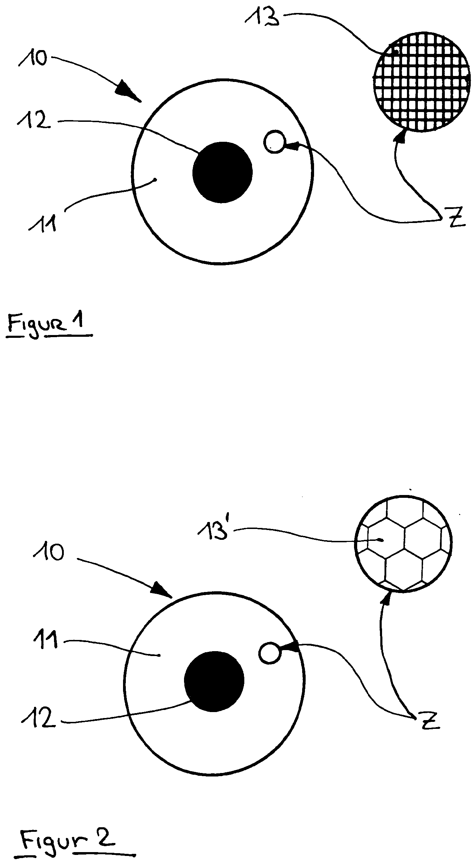

Zur Verdeutlichung der erfindungsgemäßen Lösung sollen die **Figuren 1 und 2** dienen.

**Figur 1** zeigt einen holzgefassten Stift 10 in der Draufsicht, der sich aus einer Mine 12 und einer diese Mine 12 konzentrisch umgebenden Wabenkörper/Umhüllung 11 zusammensetzt. Die Wabenstruktur/Umhüllung 11 weist eine Vielzahl hohler Längstrukturen 13 auf, welche in dieser Ausführung als quadratische Röhrenstruktur bezeichnet wird, bzw. werden kann. Zur Verdeutlichung der Wabenstruktur wurde ein Detail Z vergrößert dargestellt.

Allgemein gilt es anzumerken, dass die Verteilung/Anordnung der Längsstrukturen im Wabenkörper/Umhüllung bevorzugt gleichmäßig über den Querschnitt verteilt sein müssen, damit der Stift in idealer Weise in allen Richtungen senkrecht zu den Längsstrukturen die gleichen Festigkeitswerte aufweist.

Auch kann sich die Verteilung/Anordnung der Längsstrukturen im Wabenkörper in radialer unterschiedlich ausgebildet sein.

**Figur 2** zeigt eine alternative Ausgestaltung eines Gerätes/Stiftes 10, mit hohlen Längsstrukturen 13' in der Umhüllung/Wabenkörper 11. Zur Verdeutlichung der Wabenstruktur wurde ein Detail Z vergrößert dargestellt.

Es hat sich gezeigt, dass sich die hohlen Längsstrukturen nicht über dem gesamten Querschnitt der Umhüllung ausge-bildet sein müssen. Verbesserung in Festigkeit bei verbesserter Spitzbarkeit können auch schon bei teilweiser Durch-setzung der Umhüllung/Wabenkörper mit Längsstrukturen festgestellt/gemessen werden.

Sehrgute Ergebnisse konnten beispielsweise dann gemessen werden, wenn die hohlen Längsstrukturen über den gesamten Querschnitt des Wabenkörpers/Umhüllung ausgebildet sind und die Größe der Waben/Längsstrukturen der bei handelsüblichen Katalysatoreinsätzen entspricht. Dies entspricht Wandstärken zwischen den hohlen Längsstrukturen kleiner 100 µm.

Es ist jedoch auch möglich die Wandstärken zwischen den hohlen Strukturen und die Querschnittsflächen der hohlen Längsstrukturen größer als die von Katalysatoren zu gestalten, denn der gewünschte Effekt zur Lösung der Aufgabe ist bei fast jeder Ausgestaltung messbar, wobei dies unabhängig von der Querschnittform der hohlen Längsstrukturen ist. Es sei darauf hingewiesen, dass auch unterschiedliche Hohlraumprofile im Querschnitt eines Körpers kombiniert werden können.

Es hat sich zudem gezeigt, dass Längsstrukturen welche im Randbereich der Umhüllungs-/Wabenkörperoberfläche liegen auch aufgeschnitten sein können, wodurch je nach Querschnittform auch hinterschnittige Konturen entstehen können.

Unabhängig von vorstehend genannten Vorteilen der erfindungsgemäßen Lösung sei als weiterer Vorteil genannt, dass derartig gestaltete Wabenkörper/Geräteelemente und den damit versehenen Geräten ein signifikant geringeres Gewicht aufweisen und zugleich Material bei deren Herstellung gespart wird. Bei Wabenkörper aufweisenden Geräten kann eine Materialeinsparung bis zu 80 Gew. % erreicht werden, abhängig von Anzahl und Querschnittsfläche der Längsstrukturen sowie den Wandstärken zwischen den Strukturen gegenüber einem Körper aus Vollmaterial.

Hierbei gilt es anzumerken, dass über die hohl ausgebildeten Längsstrukturen der Wabenkörper auch Mittel zur Imprägnation, Einfärbung oder Verbesserung der Spitzfähigkeit problemlos eingebracht werden können, da die hohlen Längsstrukturen aufgrund ihrer Dimensionierung kapillar ausgebildet sein können.

Nachfolgend werden beispielhaft drei Rahmenbeispiele für eine mögliche Zusammensetzung eines Holzersatzwerkstoffes angeführt, welchen bei der Herstellung anisotroper Umhüllungen Verwendung finden können.

### Rahmenbeispiel 1: (Naturstoff-Kunststoff-Verbundwerkstoff)

| | |
|---|---|
| 15 - 30 Gew.-% | mindestens eines polymeren Bindemittels, |
| 50 - 80 Gew.-% | mindestens eines organischen Füllstoffs, |
| 0 - 20 Gew.-% | mindestens eines anorganischen Füllstoffs, |
| 0,5 - 5 Gew.-% | mindestens eines Haftvermittlers, |
| 1 - 30 Gew.-% | mindestens eines Wachses, |
| 0 - 10 Gew.-% | mindestens eines Farbpigments, und |
| 0 - 10 Gew.-% | mindestens eines Additivs, |

### Rahmenbeispiel 2: (Naturstoff-Kunststoff-Verbundwerkstoff)

mindestens 50 Gew.% Naturstoff(e)
0 bis 20 Gew.% anorganische(r) Füllstoff(e)
0 bis 10 Gew.% Haftvermittler
0 bis 10 Gew.% Farbpigment(e)
0 bis 10 Gew.% Wachs(e)
0 bis 5 Gew.% Additiv(e)
Rest Kunststoff(e) als polymeres Bindemittel

Bei den in den Beispielen eingesetzten Kunststoff/Polymer im Naturstoff-Kunststoff-Verbundwerkstoffs handelt es sich um ein Polymer aus der Gruppe der Polyolefine, Polystyrole, Styrolacrylnitrile, Acrylnitril-Butadien-Styrole, Polycarbonate, Polyvinylchlorid und/oder aus der Gruppe der Biopolymere.

Als organische Füllstoffe/Naturstoffe im Naturstoff-Kunststoff-Verbundwerkstoffs sind Holz, Nutzpflanzen, Bambus, Kernmehle und/oder Cellulose eingesetzt, die in Pulver-, Mehl- und/oder Faserform vorliegen, wobei die Größe der Füllstoffe eine maximale Partikelgröße von 250 µm, insbesondere von maximal 100 µm beträgt.

Zum Einstellen der Sprödigkeit und der Gleiteigenschaften beim Spitzen ist es vorteilhaft, wenn mindestens ein anorganisches Füllmittel aus der Gruppe der Schichtsilikate, Talkum, Bornitrid, Speckstein und Graphit eingesetzt ist.

Als Farbpigmente können bunte als auch weiße Pigmente eingesetzt werden. So kann beispielsweise Titandioxid zur Aufhellung des Wabenkörpers eingesetzt werden.

In Naturstoff-Kunststoff-Verbundwerkstoffen hat es sich als vorteilhaft erwiesen, wenn ein Haftvermittler zur Anbindung des Nativstoffes an den Kunststoff eingesetzt ist. Beispielhaft seien als Haftvermittler ein Polyethylen mit aufgepfropftem Maleinsäureanhydrid oder ein Propylen mit aufgepfropftem Maleinsäureanhydrid genannt.

Die eingesetzten Wachse umfassen Amidwachse, Fettsäuren wie z.B. Stearinsäure und Palmitinsäure, Montanwachs, Stearate, Fettsäureester und/oder Paraffinwachse. Den Rezepturen können zudem Additive wie beispielsweise Gleitmittel, Weichmacher, oberflächenaktive Substanzen, thermische Stabilisatoren und/oder UV-Stabilisatoren beigefügt sein.

Der Effekt der Festigkeitsteigerung bei gleichzeitig verbesserter Spitzbarkeit bei Schreib-, Zeichen-, Mal-, Markier- und/oder Kosmetikgeräten ist je nach verarbeitetem Werkstoff zwar immer größer als bei einem entsprechenden Vollmaterial, jedoch können die Werte des Grades der Verbesserung je nach verwendetem Werkstoff variieren. Die Verbesserung durch die erfindungsgemäße Lösung beruht rein auf einer technischen Ausgestaltung und kann als werkstoffunabhängig bezeichnet werden.

Ein Blei-, Farb-, Markier- oder Kosmetikstift, welcher einen Wabenkörper/Umhüllung aus einem Holzersatzwerkstoff oder Kunststoff aufweist, wobei aufgrund hohler Längsstrukturen eine Anisotropie ausgebildet ist, ist mit einem handelsüblichen Handspitzer mit geringem Kraftaufwand spitzbar und weist gleichzeitig die ausreichende Festigkeit bei niedrigem Gewicht auf.

Um eine Vergleichbarkeit bei Messungen zur Spitzbarkeit herzustellen, wurden Probekörper aus Vollmaterial (Holz, Holzersatzwerkstoff) und ein Wabenkörper aus Naturstoff-Kunststoff-Verbundwerkstoff mit hohlen Längsstrukturen hergestellt und angespitzt. Dabei führt der Einsatz eines als gut spitzbar beurteilter Probekörper dazu, dass ein damit hergestellter Stift, bestehend aus einer Umhüllung aus Holz, Holzersatzwerkstoff oder Wabenkörper aus Naturstoff-Kunststoff-Verbundwerkstoff und Mine ebenfalls mit geringem Kraftaufwand gespitzt werden kann.

Allgemein gilt als mit geringem Kraftaufwand spitzbar, wenn wie im Versuch ein Stift der bei der Prüfung bzw. Anspitzung ein so genanntes Spitzmoment von kleiner 9 Ncm aufweist.

Das Spitzmoment wird in einer zu diesem Zweck entwickelten Prüfmaschine bestimmt, indem ein Prüfkörper in Form eines Vollkörpers aus Holz, einem Vollkörper aus Holzersatzwerkstoff und einem Wabenkörper aus Naturstoff-Kunststoff-Verbundwerkstoff 20 s lang kontinuierlich gespitzt wird. Das während der Anspitzung ermittelte durchschnittliche Drehmoment [in Ncm], das zum kontinuierlichen Anspitzen eines Prüfkörpers mit einem Durchmesser von 7,6 ± 0,2 mm mit einer Drehzahl von 43 U/min bei bereits vorhandenem Spitzkegel, d.h. bereits im gewünschten Winkel angespitzt ist, in einem handelsüblichen Spitzer mit neuer Klinge erforderlich ist, wird als Spitzmoment bezeichnet.

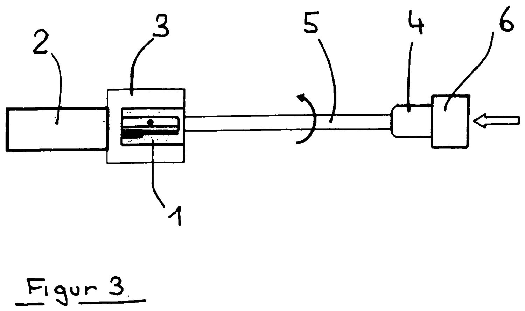

Das Prinzip einer Vorrichtung zur Messung des Spitzmoments ist in der **Figur 3** zur Erläuterung dargestellt. Ein Spitzer 1 wird dazu in einer, mit einer Drehmoment-Messvorrichtung 2 verbundenen Halterung 3 befestigt. Ein Prüfkörper 5 wird in einer Aufnahme 4 rotierbar bereitgestellt und in den Spitzer 1 eingeführt. Es erfolgt ein pneumatischer Vorschub des rotierenden Prüfkörpers 5 in Richtung des Spitzers 1 mittels einer Vorschubeinrichtung 6, die auf die Aufnahme 4 des Prüfkörpers 5 mit einer Vorschubkraft von 20 N einwirkt (siehe Pfeil rechts im Bild). Das während des Spitzvorgangs des Prüfkörpers 5 von der Drehmoment-Messvorrichtung 2 gemessene Drehmoment wird aufgezeichnet und über die Prüfdauer gemittelt, um das Spitzmoment zu bestimmen.

Dass sich die Spitzbarkeit von Probekörpern in erfindungsgemäßer Ausführung deutlich verbessert geht aus nachfolgender Tabelle hervor.

Hierbei weisen die Probekörper gemäß dem Stand der Technik DE 102008034013 A1 und dem Wabenkörper mit quadratischer Röhrenstruktur nach Figur 1 folgende Zusammensetzung auf:

| | |
|---|---|
| Polyethylen High Density (PE-HD) | 25,0 Gew.-% |
| Holzfasern | 65,0 Gew.-% |
| Polyethylen mit gepfropften Maleinsäureanhydrid | 2,0 Gew.-% |
| Amidwachs | 3,0 Gew.-% |
| Stearinsäure | 3,0 Gew.-% |
| Titandioxid | 2,0 Gew.-% |

| | **Natürliches Holz** | **Holzersatzwerkstoffe gemäß** DE 102008034013 A1 | **Wabenkörper mit hohlen Strukturen (gemäß Erfindung)** |
|---|---|---|---|
| **Spitzmoment** Ncm | 7 bis 12 | 9 bis 10 | <9 |

Weiterhin ist eine Verwendung eines erfindungsgemäßen Wabenkörpers/Umhüllung aus Holzersatzwerkstoff/Naturstoff-Kunststoff-Verbundwerkstoff mit hohlen Längsstrukturen zur Herstellung holzgefasster Stifte ideal, welche eine Mine aus Radiergummi-Material und eine Ummantelung für die Mine aufweisen, wobei die klassische Holzummantelung oder die Ummantelung aus dem Holzersatzwerkstoff durch den erfindungsgemäßen Wabenkörper/Ummantelung ersetzt wird.

Besonders bevorzugt ist es bei der Herstellung von Stiften mit farbabgebenden Minen oder Minen aus Radiergummi-Material, wenn der erfindungsgemäße Wabenkörper/Ummantelung, bestehend aus Holzersatzwerkstoff/Naturstoff-Kunststoff-Verbundwerkstoff mit hohlen Längsstrukturen durch Co-Extrudieren gebildet wird. Dabei werden die Mine und die Umhüllung in-situ in einem Extruder geformt und über ein Mundstück gemeinsam in der jeweils gewünschten Geometrie als Endlosstrang ausgebracht, der nur noch in einzelne Stifte zerteilt werden muss. Wabenkörper und Mine werden coextrudiert.

Die Extrusion ist ein kontinuierliches Herstellungsverfahren und daher zur kostengünstigen Massenproduktion von Wabenkörpern an sich und Schreib-, Zeichen-, Mal,- Markier- oder Kosmetikgeräte umfassend einen Wabenkörper hervorragend geeignet.

Extrusion oder Co-Extrusion erfolgen über ein spezielles Wabenstrukturwerkzeug, wie dies aus der Ziegel- oder Katalysatorherstellung, zur Ausformung von Hohlkammerprofilen mit Längsstrukturen bekannt ist.

Die Extrusions-Verfahren bieten den Vorteil, dass nahezu alle Querschnittsgeometrien von Stiften hergestellt werden können.

Eine andere Möglichkeit besteht darin, eine bereits vorliegende Mine zu ummanteln, was ebenfalls mittels Extrusion über Querspritzköpfe, analog der Kabelummantelung geschehen kann.

Auch Kugelschreiber, Feinminenstifte oder Faserschreiber können Elemente aufweisen, welche als Wabenkörper ausgebildet ist. Hierzu werden die wabenförmigen Halbzeuge bzw. Wabenkörper ebenso mittels Extrusion hergestellt.

## Patentansprüche

1. **Schreib-, Zeichen-, Mal- oder Kosmetikgerät** umfassend mindestens einen Wabenkörper,
wobei der mindestens eine Wabenkörper als eine Umhüllung einer farbabgebenden Mine ausgebildet ist,
wobei der mindestens eine Wabenkörper aus einem Naturstoff-Kunststoff-Verbundwerkstoff gebildet ist,
wobei der mindestens eine Wabenkörper eine Vielzahl von zueinander achsparallel hohlen Längsstrukturen beinhaltet und die hohlen Längsstrukturen als eine Röhrenstruktur ausgebildet sind.

2. **Gerät** nach Anspruch 1,
**dadurch gekennzeichnet,**
**und dass** die Mine in der Umhüllung verschiebesicher gehaltert ist.

3. **Gerät** nach Anspruch 2,
**dadurch gekennzeichnet,**
**dass** die Umhüllung und die farbabgebende Mine coextrudiert ausgebildet sind.

4. **Gerät** nach einem der Ansprüche 1 bis 3,
**dadurch gekennzeichnet,**
**dass** die Vielzahl von hohlen Längsstrukturen des Wabenkörpers parallel zur Längsachse des Gerätes ausgerichtet sind.

5. **Gerät** nach mindestens einem der vorstehenden Ansprüche,
**dadurch gekennzeichnet,**
**dass** die Querschnitte der Längsstrukturen im Wabenkörper rund, ellipsenförmig, vieleckig und/oder sternförmig ausgebildet sind.

6. **Gerät** nach mindestens einem der vorstehenden Ansprüche,
**dadurch gekennzeichnet,**
**dass** das Gerät ein Blei-, Bunt- oder Kosmetikstift ist.

7. **Gerät** nach einem der Ansprüche 1 bis 6,
**dadurch gekennzeichnet,**
**dass** ein Naturstoff des Naturstoff-Kunststoff-Verbundwerkstoffs aus Holz und/oder Cellulose besteht.

8. **Gerät** nach Anspruch 7,
**dadurch gekennzeichnet,**
**dass** das Holz und/oder Cellulose in Pulver-, Mehl- und/oder Faserform vorliegt.

9. **Gerät** nach einem der Ansprüche 1 bis 8,
**dadurch gekennzeichnet,**
**dass** der Naturstoff-Kunststoff-Verbundwerkstoff
mindestens 50 Gew.% Naturstoff(e)
0 bis 20 Gew.% anorganische(r) Füllstoff(e)
0 bis 10 Gew.% Haftvermittler
0 bis 10 Gew.% Farbpigment(e)
0 bis 10 Gew.% Wachs(e)
0 bis 5 Gew.% Additiv(e)
Rest Kunststoff(e) als polymeres Bindemittel
beinhaltet.

10. **Gerät** nach einem der Ansprüche 1 bis 9,
**dadurch gekennzeichnet,**
**dass** ein Kunststoff des Naturstoff-Kunststoff-Verbundwerkstoffs ein Polymer aus der Gruppe der Polyolefine, Polystyrole, Styrolacrylnitrile, Acrylnitril-Butadien-Styrole, Polycarbonate, Polyvinylchlorid und/oder aus der Gruppe der Biopolymere ausgewählt ist.

11. **Gerät** nach einem der Ansprüche 1 bis 10,
**dadurch gekennzeichnet,**
**dass** die Außenkontur des Gerätes rund oder vieleckig ausgebildet ist.

12. **Verfahren zur Herstellung eines Schreib-, Zeichen-, Mal- oder Kosmetikgeräts** umfassend mindestens einen Wabenkörper,
wobei der mindestens eine Wabenkörper als eine Umhüllung einer farbabgebenden Mine ausgebildet ist,
wobei der mindestens eine Wabenkörper aus einem Naturstoff-Kunststoff-Verbundwerkstoff gebildet ist,
wobei der mindestens eine Wabenkörper eine Vielzahl von zueinander achsparallel hohlen Längsstrukturen beinhaltet **und** die hohlen Längsstrukturen als eine Röhrenstruktur ausgebildet sind,
wobei der Wabenkörper durch Extrusion hergestellt wird.

13. **Verfahren** nach Anspruch 12,
wobei der Wabenkörper und die Mine coextrudiert werden.

## Claims

1. Writing, drawing, painting or cosmetic instrument comprising at least one honeycomb body,
wherein the at least one honeycomb body is constructed as a casing of a colour-imparting core,
wherein the at least one honeycomb body is formed from a composite of natural material and synthetic material,
wherein the at least one honeycomb body contains a plurality of mutually axially parallel hollow longitudinal structures and the hollow longitudinal structures are constructed as a tube structure.

2. Instrument according to claim 1, **characterised in that** the core is held in the casing to be secure against displacement.

3. Instrument according to claim 2, **characterised in that** the casing and the colour-imparting core are formed to be coextruded.

4. Instrument according to any one of claims 1 to 3, **characterised in that** the plurality of hollow longitudinal structures of the honeycomb body are oriented parallelly to the longitudinal axis of the instrument.

5. Instrument according to at least one of the preceding claims, **characterised in that** the cross-sections of the longitudinal structures in the honeycomb body are formed to be round, elliptical, polygonal and/or star-shaped.

6. Instrument according to at least one of the preceding claims, **characterised in that** the instrument is a lead, colouring or cosmetic pencil.

7. Instrument according to any one of claims 1 to 6, **characterised in that** a natural material of the composite of natural material and synthetic material consists of wood and/or cellulose.

8. Instrument according to claim 7, **characterised in that** the wood and/or cellulose is or are present in powder form, particulate form and/or fibrous form.

9. Instrument according to any one of claims 108, **characterised in that** the composite of natural material and synthetic material contains
at least 50 weight % of natural material or materials
0 to 20 weight % of inorganic filler or fillers
0 to 10 weight % of adhesion promoting agent or agents
0 to 10 weight % of colouring pigment or pigments
0 to 10 weight % of wax or waxes
0 to 5 weight % of additive or additives
remainder synthetic material or materials as polymer binder.

10. Instrument according to any one of claims 1 to 9, **characterised in that** a synthetic material of the composite of natural material and synthetic material is a polymer selected from the group of polyolefins, polystyrols, styrolacrylnitriles, acrylonitrile-butadiene-styrols, polycarbonates, polyvinylchlorides and/or from the group of biopolymers.

11. Instrument according to any one of claims 1 to 10, **characterised in that** the outer contour of the instrument is formed to be round or polygonal.

12. A method for producing a writing, drawing, painting or cosmetic instrument comprising at least one honeycomb body,
wherein the at least one honeycomb body is constructed as a casing of a colour-imparting core,
wherein the at least one honeycomb body is formed from a composite of natural material and synthetic material,
wherein the at least one honeycomb body contains a plurality of mutually axially parallel hollow longitudinal structures and the hollow longitudinal structures are constructed as a tube structure, and
wherein the honeycomb body is produced using extrusion.

13. The method according to claim 12, wherein the honeycomb body and the core are coextruded.

## Revendications

1. Appareil d'écriture, de dessin, de peinture ou cosmétique, comportant au moins un corps alvéolaire, l'au moins un corps alvéolaire étant configuré sous la forme d'une enveloppe d'une mine délivrant de la couleur, l'au moins un corps alvéolaire étant formé à partir d'un matériau composite matière naturelle-matière plastique, l'au moins un corps alvéolaire contenant une pluralité de structures longitudinales creuses dont les axes sont parallèles entre eux, et les structures longitudinales creuses étant configurées sous la forme d'une structure tubulaire.

2. Appareil selon la revendication 1, **caractérisé en ce que** la mine est maintenue sans possibilité de déplacement dans l'enveloppe.

3. Appareil selon la revendication 2, **caractérisé en ce que** l'enveloppe et la mine délivrant de la couleur sont configurées sous forme coextrudée.

4. Appareil selon l'une quelconque des revendications 1 à 3, **caractérisé en ce que** la pluralité de structures longitudinales creuses du corps alvéolaire sont orientées parallèlement à l'axe longitudinal de l'appareil.

5. Appareil selon au moins l'une quelconque des revendications précédentes, **caractérisé en ce que** les sections transversales des structures longitudinales dans le corps alvéolaire sont configurées sous forme ronde, elliptique, polygonale et/ou en étoile.

6. Appareil selon au moins l'une quelconque des revendications précédentes, **caractérisé en ce que** l'appareil est un crayon à papier, de couleur ou cosmétique.

7. Appareil selon l'une quelconque des revendications 1 à 6, **caractérisé en ce qu'**une matière naturelle du matériau composite matière naturelle-matière plastique est constituée de bois et/ou de cellulose.

8. Appareil selon la revendication 7, **caractérisé en ce que** le bois et/ou la cellulose se présentent sous forme de poudre, de farine et/ou de fibres.

9. Appareil selon l'une quelconque des revendications 1 à 8, **caractérisé en ce que** le matériau composite matière naturelle-matière plastique contient :
au moins 50 % en poids de matière(s) naturelle(s),
0 à 20 % en poids de charge(s) inorganique(s),
0 à 10 % en poids de promoteur(s) d'adhésion,
0 à 10 % en poids de pigment(s) coloré(s),
0 à 10 % en poids de cire(s),
0 à 5 % en poids d'additif(s),
la quantité résiduelle de matière(s) plastique(s) en tant que liant polymère.

10. Appareil selon l'une quelconque des revendications 1 à 9, **caractérisé en ce qu'**une matière plastique du matériau composite matière naturelle-matière plastique est un polymère choisi dans le groupe des polyoléfines, polystyrènes, styrène-acrylonitrile, acrylonitrile-butadiène-styrène, polycarbonates, polychlorure de vinyle et/ou dans le groupe des biopolymères.

11. Appareil selon l'une quelconque des revendications 1 à 10, **caractérisé en ce que** le contour extérieur de l'appareil est configuré sous forme ronde ou polygonale.

12. Procédé de fabrication d'un appareil d'écriture, de dessin, de peinture ou cosmétique, comportant au moins un corps alvéolaire, l'au moins un corps alvéolaire étant configuré sous la forme d'une enveloppe d'une mine délivrant de la couleur, l'au moins un corps alvéolaire étant formé à partir d'un matériau composite matière naturelle-matière plastique, l'au moins un corps alvéolaire contenant une pluralité de structures longitudinales creuses dont les axes sont parallèles entre eux, et les structures longitudinales creuses étant configurées sous la forme d'une structure tubulaire le corps alvéolaire étant fabriqué par extrusion.

13. Procédé selon la revendication 12, dans lequel le corps alvéolaire et la mine sont coextrudés .
